# EUROPEAN PATENT APPLICATION

(11) **EP 4 498 074 A1**
(43) Date of publication of application: **29.01.2025**
(21) Application number: 23188402.4
(22) Date of filing: 28.07.2023
(51) Int. Cl.: G01N 23/20008

(54) **AUTOMATED ALIGNMENT OF X-RAY OPTICS AND X-RAY BEAMS**

(71) Applicant: Rigaku Corporation, Akishima-shi Tokyo 196-8666 (JP)
(72) Inventor: KUCHARCZYK, Damian, 50-018 Wroclaw (PL); BLASZCZAK, Jaroslaw, 53-030 Wroclaw (PL)
(74) Representative: Lambacher, Michael

(57) **Abstract**

Provided is an X-ray optical device (100) configured to align X-ray beams and the X-ray optics generating the X-ray beams in an automatized way. The X-ray optical device comprises a housing (110) to be arranged in front of an X-ray source (200); an X-ray optics (120) that is movably mounted in the housing (110) and configured to receive X-rays (220) from the X-ray source (200) to generate and project a beam of X-rays (220a); and an actuating unit (130) configured to move the X-ray optics (120) within the housing (110) in at least one direction transverse to an X-ray beam propagation direction while maintaining a pre-adjusted angle of incidence between the X-ray optics (120) and the incident X-rays (220) to move the X-ray beam (220a) in the at least one direction transverse to the propagation direction. Further provided is an X-ray generator comprising an X-ray source and the X-ray optical device.

## Description

### Technical Field

The present invention generally relates to the field of X-ray analysis. More particularly, the present invention relates to an X-ray optical device configured to automatically align X-ray optics and X-ray beams.

### Background

X-ray analysis techniques, such as X-ray diffraction (or XRD) have become very popular because they enable a non-destructive analysis of samples. For instance, X-ray diffraction has become one of the fundamental experimental techniques for investigating structural properties of crystalline, polycrystalline or powder samples.

X-ray analysis apparatuses, such as X-ray diffractometers, comprise an X-ray generator for generating and directing an X-ray beam of desired characteristics (i.e., desired wavelength/energy, beam shape, intensity) to a target position, a detector (for instance, a semiconductor-based X-ray area detector) for detecting intensities of diffracted X-rays and a goniometer with a sample mounting stage for supporting a sample to be analysed at the target position.

X-ray generators employed in X-ray analysis apparatuses usually comprise an X-ray source that emits X-rays of desired emission characteristics and an X-ray optics that generates and projects a beam of X-rays (X-ray beam) of desired characteristics (wavelength, intensity shape) onto a target position (sample position). Current technologies in X-ray optics employ one or more (graded) multilayer X-ray mirrors for monochromization, alignment and/or bundling of X-rays received from the X-ray source. Such multilayer X-ray mirrors consist of alternating stacks of reflector and spacer layers and exploit the effect of Bragg reflection to generate monochromatized X-ray beams with high intensity. Depending on the experimental needs, such multilayer mirrors may be designed as parabolic multilayer mirrors to generate a parallel beam from divergent X-rays emitted by the X-ray source or as elliptical multilayer mirrors to generate a focused X-ray beam.

Despite the above mentioned advantages it is clear that the full potential of X-ray optics comprising (graded) multilayer mirror(s) can only be reached if the mirrors are sufficiently well aligned with respect to the X-ray source. In particular, a high reflectivity of the mirror(s) and therefore a high beam intensity can only be obtained if the mirrors of the X-ray optics are aligned such that Bragg's law for constructive interference is met. This alignment of the X-ray optics with respect to the X-ray source is performed manually and takes a lot of time. Moreover, after alignment of the X-ray optics the whole generator must be further aligned such that the beam generated by the X-ray optics is projected to a desired target position (preferably the position of the sample to be analysed).

EP 1462 794 B1 describes an alignment technique in which the housing of the X-ray optics is tilted and shifted with respect to the X-ray source (X-ray tube). The alignment is performed manually by adjusting corresponding adjusting screws (four screws are operated manually for this alignment). Moreover, a beam conditioner, such as a collimator, which is positioned in front of the X-ray optics is further adjusted relative to the housing of the X-ray optics by means of two additional adjusting screws. Once the X-ray optics and the collimator have been adjusted, the whole system is further adjusted/tilted by additional screws with respect to a pedestal such that the X-ray beam leaving the X-ray optics is directed to a desired sample position.

Further, US 7 158 608 B2 describes an X-ray diffraction apparatus with improved alignment capabilities. X-ray source, monochromator (X-ray mirror) and collimator holder are factory integrated and fixed with respect to each other. A collimator is mounted in the collimator holder and is adjusted with respect to the monochromator manually. Pins are provided to vary the angle of incidence on the monochromator manually. Thereafter, the entire apparatus is shifted and tilted manually in order to direct the beam to a desired target position.

Further, US 10 598 615 B2 describes an alignment technique, in which the orientation and position of the X-ray optics and the position of the X-ray source are measured relative to a base structure on which the source and optics are mounted. The position and orientation are set at predefined target values so that the X-ray radiation leaving at the output end of the collimator is detectable. Thereafter, an adjustment is performed always with respect to the base structure such that desired target values (desired beam size, intensity, etc.) are achieved. After completing the X-ray optics alignment the entire structure on which the source and the optics are mounted, is pivoted by adjusting corresponding screws.

There is still a need for an improved alignment technique which accelerates and simplifies the alignment of the X-ray optics in front of an X-ray source as well as the alignment of an X-ray beam generated by the X-ray optics with respect to a desired target position.

### Summary

To solve the above-mentioned problems and other problems, in a first aspect of the invention an X-ray optical device is provided. The X-ray optical device comprises: a housing to be arranged in front of an X-ray source; an X-ray optics that is movably mounted in the housing and configured to receive X-rays from the X-ray source to generate and project a beam of X-rays; and an actuating unit configured to move the X-ray optics within the housing in at least one direction transverse to an X-ray propagation direction while maintaining a pre-adjusted angle of incidence between the X-ray optics and the incident X-rays to move the generated X-ray beam in the at least one direction transverse to the propagation direction.

By movably mounting the X-ray optics in the housing and providing an actuating unit that moves the X-ray optics within the housing in at least one direction transverse (lateral) to the X-ray propagation direction, an X-ray beam scanning functionality along that at least one direction is realized. This X-ray beam scanning functionality can be used to align the X-ray beam along the at least one direction transverse to the X-ray beam propagation direction in an automated way. The beam propagation direction is the direction along which the X-rays are propagating in the X-ray optical device (X-ray optics).

In particular, the actuating unit may be configured to move the X-ray optics along the at least one direction transverse to the X-ray propagation direction until the X-ray beam projected by the X-ray optics has reached a desired target position along that at least one direction. Hence, the generated X-ray beam can be easily steered onto a desired target position by simply moving the X-ray optics within the housing. This movement is performed by an actuating unit and therefore in an automated way. There is no need to manually tilt the X-ray optics housing or the X-ray optics housing together with the X-ray source (i.e., the entire X-ray generator) in order to align the X-ray beam with respect to the desired target position.

According to one variant, the at least one direction transverse to the X-ray propagation may comprise a first lateral direction and a second lateral direction. The second lateral direction may be (substantially) perpendicular to the first lateral direction and both directions may be perpendicular to the X-ray propagation direction. The X-ray optics may be mounted in the housing to be movable in the first direction and/or second direction. Moreover, the actuating unit may be configured to move the X-ray optics along the first direction and/or the second direction while maintaining a pre-adjusted angle of incidence during movement along the first direction and/or second direction. In such a configuration, the X-ray beam can be scanned along the first direction and/or the second direction. This scanning functionality can be used to align the projected X-ray beam along the first direction and/or the second direction.

In particular, the actuating unit may be configured to move the X-ray optics along the first direction and/or the second direction until the X-ray beam projected by the X-ray optics has reached a desired target position. Again, the generated X-ray beam can be steered onto a desired target position in an automated way by moving the X-ray optics within the housing in the first direction and/or second direction until the projected X-ray beam reaches the desired target position. There is no need to tilt the X-ray optics housing or the whole X-ray generator in the first direction and/or second direction to align the X-ray beam with respect to a desired target position.

The (desired) target position may be a position of a sample to be analysed (for instance, the position of the sample on a goniometer of an X-ray analysis apparatus) or any other position selected by a user.

The actuating unit may further be configured to tilt the X-ray optics within the housing to pre-adjust an angle of incidence between the X-ray optics and the X-rays incident on the X-ray optics such that the intensity (flux) of the X-ray beam projected by the X-ray optics is maximized. If the X-ray optics comprises a total reflection mirror, the angle of incidence pre-adjusted by the actuating unit may be an angle under which the incident X-rays are totally reflected by the reflection mirror. If, however, the X-ray optics comprises at least one multilayer mirror comprising a stack of multilayers with specific d-spacing, the angle of incidence θ pre-adjusted by the actuating unit may be an angle for which Bragg's law is met, i.e., *n^{∗}λ = 2d sin(ϑ)*. Only in this case the intensity of the X-ray beam can be maximized.

From Bragg's law it is derivable that the angle of incidence θ depends on the desired wavelength λ of the X-ray beam and vice versa. Hence, the actuating unit may be configured to pre-adjust the angle of incidence in dependence of a desired X-ray wavelength. Or in other words, the actuating unit may be configured to tilt the X-ray optics in dependence of the desired wavelength of the X-ray beam. On the other hand, by tilting the X-ray optics, the angle of incidence may be changed and X-rays of a different wavelength may meet the Bragg condition. Hence, the actuating unit can also be used to select between two or more X-ray wavelengths by pre-adjusting corresponding angles of incidence that meet the Bragg condition.

As mentioned above, the pre-adjusted angle is maintained during movement of the X-ray optics along the at least one direction transverse to the X-ray beam propagation direction. This has the benefit that the beam intensity (and also the beam shape) can be maintained during beam movement. Or in other words, by keeping the pre-adjusted angle of incidence (substantially) invariant during movement of the X-ray optics the intensity of the projected beam (and also the shape of the beam) does not considerably change with beam movement. The projected X-ray beam has therefore the same characteristics (intensity, shape, wavelength) even if the target position is changed and the beam is projected onto that new target position.

The housing of the X-ray optical device may be configured to receive X-rays from varying focal spots of the X-ray source. Each focal spot may be a spot-like area on a target of the X-ray source onto which accelerated electrons are bombarded to generate X-rays. The varying focal spots may be arranged spaced apart from each other on the target. At least a part of the X-rays emitted from each focal spot may pass the exit aperture of the X-ray source and may be received by the housing. The actuating unit may further be configured to move and tilt the X-ray optics in dependence of a selected (actuated) focal spot on the X-ray source target such that an X-ray beam of maximized intensity is generated for that focal spot and projected onto a desired target position. More specifically, the actuating unit may be configured to tilt the X-ray optics in dependence of the position of the selected focal spot such that a desired angle of incidence is obtained for X-rays emitted from the selected focal spot to generate an X-ray beam of maximized intensity. If the X-ray target is a hybrid target comprising different target materials at different focal spots, the actuating unit may be configured to additionally tilt the X-ray optics in dependence of the specific X-ray wavelength associated with the X-ray emission from each focal spot to adjust for each focal spot an angle of incidence that meets the Bragg condition.

Independent of whether the target comprises the same target material or different target materials at different focal spots, the moving mechanism described herein can be used to align the X-ray optics to a selected (actuated) focal spot in a fully automated way. In particular, the X-ray optical device allows for a switching between different focal spots and therefore between X-ray beams of different characteristics (wavelength) if the X-ray target is a hybrid target comprising different target materials at different focal spots.

It should be noted that the above-described moving mechanism for automatically aligning an X-ray beam and the X-ray optics works for different X-ray optics. It does not depend on the specific details of the X-ray optics. It works for X-ray optics comprising one reflecting (multilayer) X-ray mirror, two reflecting (multilayer) X-ray mirrors (e.g., arranged side-by-side or in a Kirkpatrick-Baez configuration), or any other X-ray mirror configuration suitable for generating a collimated or focused X-ray beam.

In particular, the moving mechanism described above may also work for different sets of (multilayer) X-ray mirrors arranged in the housing, wherein each set is optimized for a specific X-ray wavelength as described in the patent publication US 8 126 117 B2. In such a case the moving mechanism may be configured to move and/or tilt each set of mirrors individually in dependence of the X-ray wavelength for which each set of mirrors is optimized to adjust an angle of incidence that meets the Bragg condition and in order to project the generated X-ray beam to a desired target position. Moreover, the moving mechanism described above may also work for one or more hybrid X-ray mirrors which are optimized for two or more different characteristic X-ray wavelengths (for instance, optimized for Kα and Kβ emission lines).

The X-ray optical device may further comprise a control unit configured to control the actuating unit to move and/or tilt the X-ray optics as described above. In particular, the control unit may be configured to control, based on information indicative of a desired target position, the actuating unit to move the X-ray optics along the at least one direction transverse to the X-ray propagation direction to a projection position within the housing at which the X-ray beam is projected by the X-ray optics to the desired target position. The desired target position may be a sample position on a mounting stage of a goniometer or any other meaningful position received, for instance, by a user input. The user input may be obtained from an input device or an input mask of a graphical user interface. The control unit may calculate, based on that target position, a corresponding projection position within the housing to which the X-ray optics needs to be moved to project the X-ray beam to the desired target position. Information indicative of the type and/or geometry of the X-ray optics (and thus indicative of the projection behaviour of the X-ray optics) may be additionally used to calculate the projection position.

Additionally or alternatively, the control unit may be configured to control, based on information indicative of a (characteristic) wavelength of the X-rays to be projected, the actuating unit to tilt the X-ray optics such that the X-ray beam intensity is maximized. In particular, the control unit may calculate a desired angle of incidence in dependence of the X-ray wavelength that leads to maximized X-ray beam intensity, and control the actuating unit to tilt the X-ray optics until the desired angle of incidence has been realized. For multilayer X-ray optics the desired angle of incidence corresponds to the Bragg reflection angle (i.e., the angle that meets the Bragg condition). For this calculation the control unit may additionally use information indicative of the type and/or geometry of the X-ray optics (e.g., d-spacing). Alternatively, the control unit may be configured to control the actuating unit to tilt the X-ray optics over a predefined tilting range while the intensity of the projected X-ray beam is (continuously) measured and to adjust that tilt angle which leads to a projected X-ray beam of maximized intensity.

Additionally or alternatively, the control unit may be configured to control, based on information indicative of a focal spot position of the X-ray source, the actuating unit to move and tilt the X-ray optics within the housing such that the position of the X-ray optics within the housing and the angular orientation of the X-ray optics (angle of incidence on the X-ray optics) is adjusted to the focal spot position of the X-ray source.

To perform the above described functionalities, the control unit may be implemented as a combined software and hardware module. In particular, the control unit may comprise a storage or buffer to store/buffer the above described parameters and/or input values. Further, the control unit may comprise at least one processor configured to perform the above described calculations and generate corresponding control signals for the actuating unit.

The X-ray optical device may further comprise a sensing unit configured to sense the actual position, movement and/or tilt (angular orientation) of the X-ray optics. To achieve this, the at least one sensing unit may comprise at least one sensor configured to measure the actuation of the X-ray optics. From the measured actuation the (actual) position, movement and tilt of the X-ray optics may be derived. Alternatively the sensing unit may comprise at least one sensor configured to measure the position, movement and/or tilt of the X-ray optics directly.

The X-ray optics may be configured such that a monochromatic (or polychromatic) X-ray beam of predefined shape and/or cross-sectional size is generated from X-rays of the X-ray source and projected to a target position (for instance, sample position).

According to one implementation, the X-ray optics may be a one-dimensional X-ray optics comprising one X-ray reflecting mirror and configured to condition the X-ray beam in one direction perpendicular to the X-ray propagation direction (i.e., in the direction perpendicular to the reflecting surface of the X-ray mirror). For instance, the X-ray reflecting mirror may be a multilayer mirror (with graded d-spacing). The drive unit may comprise at least two drive motors. A first drive motor (front end drive motor) may be arranged to move the X-ray optics at its front end (that is the end of the X-ray optics located further away from the X-ray source). A second drive motor (rear end drive motor) may be arranged to move the X-ray optics at its rear end (that is the end close to the X-ray source). The first motor and the second motor may each be configured to move the X-ray optics at its front and rear ends in the direction transverse (perpendicular) to the reflecting surface of the X-ray mirror.

To achieve the above described X-ray beam scanning functionality along the at least one direction (in this case in the direction perpendicular to the reflecting mirror surface), the first drive motor and the second drive motor of the actuating unit may be moved (through control by the control unit) in a coordinated way so that the X-ray optics (X-ray reflecting mirror) is moved along that direction without changing a pre-adjusted angle of incidence. That is, the angle of incidence between the X-ray reflecting mirror and the incident X-rays is maintained throughout the movement (translation) along that direction.

Moreover, to maximize the X-ray beam intensity, the first drive motor may be run (through control by the control unit) to tilt the X-ray optics to pre-adjust a desired angle of incidence between the X-ray optics and the incident X-rays. By only moving the first drive motor in the direction perpendicular to the X-ray mirror surface, an arbitrary angle of incidence can be adjusted. In particular, the first motor may be operated such that a desired angle of incidence corresponding to a desired wavelength of the X-ray beam is adjusted.

According to another implementation, the X-ray optics may be a two-dimensional X-ray optics comprising two X-ray reflecting mirrors arranged and configured to (fully) shape and confine the X-ray beam in the (lateral) directions perpendicular to the X-ray beam propagation direction. For instance, the two mirrors may be arranged perpendicular to each other and in a side-by-side geometry or in a sequential Kirkpatrick-Baez geometry. Moreover, each of the two X-ray reflecting mirrors may be a multilayer mirror (with graded d-spacing). In such a configuration, the actuating unit may comprise two front end drive motors arranged to move the X-ray optics (i.e., the two mirrors) at its front end, and two rear end drive motors arranged to move the X-ray optics (i.e., the two mirrors) at its rear end (again the front end is the end of the X-ray optics located further away from an X-ray source).

The two front end drive motors may be arranged and configured to move the X-ray optics at its front end in directions transverse (perpendicular) to the X-ray beam propagation direction (i.e., lateral direction). For instance, the directions of movement at the front end may be a first direction and a second direction, which coincide with the normal directions of the reflecting surfaces of the respective X-ray reflecting mirrors. Hence, the two front end drive motors are arranged orthogonal to each other.

In a similar way, the two rear end drive motors may be arranged and configured to move the X-ray optics at its rear end in directions perpendicular to the X-ray beam propagation direction. For instance, the directions of movement at the rear end may be a first direction and a second direction, which coincide with the normal directions of the reflecting surfaces of the respective mirrors or which are diagonal to the reflecting surfaces of the respective mirrors. Independent of the specific arrangement, the two rear end drive motors may be arranged orthogonal to each other such that the directions of movements are orthogonal to each other.

The two front end drive motors and two rear end drive motors may each be controlled individually (by the control unit). In particular, the two front end drive motors and the two rear end drive motors may be operated independently from each other or in a coordinated way. Therefore, the two-dimensional X-ray optics can be flexibly tilted and moved in the directions perpendicular to the X-ray propagation direction.

To achieve the above described X-ray beam scanning functionality along the at least one direction (in this case along the directions perpendicular to the reflecting surfaces of the two X-ray reflecting mirrors), the two front end drive motors and the two rear end drive motors may be operated (through appropriate control by the control unit) in a coordinated way so that the X-ray optics (i.e., the two X-ray reflecting mirrors) are moved along the first direction and/or second direction without changing a pre-adjusted angle of incidence.

Moreover, to maximize the X-ray beam intensity, the two front end drive motors may be operated (through control by the control unit) to tilt the X-ray optics to pre-adjust a desired angle of incidence between the X-ray optics and the incident X-rays. By moving the front end drive motors in the first direction and/or second direction (while, for instance, keeping the rear end motors in an idle state) an arbitrary angle of incidence can be adjusted. Both front end motors may be operated such that a desired angle of incidence corresponding to a desired wavelength of the X-ray beam can be adjusted.

The one or two front end drive motors of the actuating unit may be rotary drive motors comprising each a rotating shaft with an eccentric transmission wheel that cooperates with a corresponding motion transmission element to convert the rotary motion into a corresponding translatory motion for the X-ray optics. Alternatively, the one or two front end drive motors may be linear motors.

Likewise, the one or two rear end drive motors of the actuating unit may be rotary drive motors comprising each a rotating shaft with an eccentric transmission wheel that cooperates with a corresponding motion transmission element to convert the rotary motion into a corresponding translatory motion for the X-ray optics. Alternatively, the one two rear end drive motors may be linear motors.

According to a further implementation, the X-ray optics may comprise at least one X-ray reflecting mirror having a first mirror section for reflecting X-rays of a first wavelength and a second mirror section for reflecting X-rays of a second wavelength. Preferably, the at least one X-ray reflecting mirror may comprise two reflecting mirrors (arranged perpendicular to each other and in a side-by-side configuration), wherein each of the two reflecting mirrors may comprise the first mirror section and the second mirror section. The actuating unit may be embodied as described above and configured to tilt the X-ray optics in dependence of the first wavelength and/or the second wavelength to adjust an angle of incidence for the first wavelength and/or the second wavelength.

The X-ray optical device may further comprise a bearing mechanism configured to bear the X-ray optics freely movable within the housing. The bearing mechanism may comprise a cardanic bearing configured to freely suspend the rear end of the X-ray optics.

In a second aspect of the invention, an X-ray generator is provided. The X-ray generator comprises: an X-ray source configured to generate X-rays; and the X-ray optical device as described above.

The X-source may comprise a fixed or rotating target to be bombarded with high-energy electrons to generate X-rays. The target may be a metal target, such as a copper (Cu), molybdenum (Mo), silver (Ar) or an iron (Fe) target.

According to one variant the (fixed or rotating) target may comprise one, two or more target regions comprising different target materials (such as Cu and Mo). In such a case X-rays of different emission characteristics may be obtained if the focal spot (i.e., the spot-like area on the target which is hit by high-energy electrons to generate X-rays) is shifted between target regions having different target materials. In particular, the X-ray source may be configured to actuate different focal spots on different target regions.

The X-ray source may further be configured to emit characteristic X-rays (e.g., Cu/Mo-Kα, Cu/Mo-Kβ) with substantially constant flux (intensity) over a large solid angle. Since the flux of the emitted characteristic X-rays does not substantially change, also the intensity of the X-ray beam generated by the X-ray optical device remains substantially constant during scanning (movement perpendicular to the X-ray propagation direction). The range of scanning (movement perpendicular to the X-ray propagation direction) may depend on the size of the exit aperture of the X-ray source. Accordingly, the size of the exit aperture may be adjusted in dependence of a desired scanning range for the X-ray beam.

Depending on the use of the X-ray generator and the employed X-ray optics, the X-ray generator may further comprise a collimator or a beam cleaning unit arranged at the output end of the X-ray optical device (i.e., at the front end at which the generated X-ray beam leaves the X-ray optical device). The collimator or beam cleaning unit are designed to further optimize the X-ray beam projected by the X-ray optical device.

In a third aspect of the invention, a method of aligning an X-ray beam with respect to a target position is provided. The method is performed by the X-ray optical device comprising an X-ray optics as described above. The X-ray optical device is arranged in front of an X-ray source and configured to generate and project an X-ray beam based on the X-rays received from the X-ray source. The method comprises the steps of: (a) tilting, by the actuating unit of the X-ray optical device, the X-ray optics to pre-adjust an angle of incidence between the X-ray optics and X-rays incident on the X-ray optics such that the intensity of the X-ray beam generated by the X-ray optics is maximized; and (b) moving, by the actuating unit of the X-ray optical device, the X-ray optics along at least one direction transverse to the X-ray beam propagation direction until the X-ray beam projected by the X-ray optical device has reached the target position. The pre-adjusted angle of incidence is maintained during step (b).

The target position may be a sample position (on the goniometer) or a centering hole of a centering element during an X-ray centering process. Alternatively, the target position may be any position indicated by a user (through user input).

The angle of incidence may depend on the wavelength of the X-ray beam (and on the type and/or geometry of X-ray optics, such as a multilayer mirror optics with specific d-spacing). Accordingly, in step (a) the X-ray optics may be tilted in dependence of the (characteristic) X-ray wavelength (and in dependence of the type of X-ray optics) to adjust an angle of incidence that leads to a maximized beam intensity. If the X-ray optics comprises one or two multilayer mirrors, the X-ray optics (i.e., the one or two multilayer mirrors) may be tilted with respect to the incident X-rays to adjust an angle of incidence that meets the Bragg condition.

The movement of the X-ray optics along the at least one direction transverse to the X-ray beam propagation direction may be a movement in a first direction and/or in a second direction transverse to the X-ray beam propagation direction (i.e., lateral direction(s)). The movement of the X-ray optics in step (b) depends on the target position, and the X-ray optics is moved, by the actuating unit, to a projection position within the housing at which the X-ray beam can be projected to the desired target position.

If the focal spot of the X-ray source from which X-rays are emitted to the X-ray optical device is changed, the method may further comprise: (c) moving and tilting, by the actuating unit of the X-ray optical device, the X-ray optics to align the X-ray optics to the new focal spot such that an X-ray beam of maximized intensity is generated based on X-rays emitted from that new focal spot and projected to the target position.

In step (c) the X-ray optics may be moved in dependence of the position of the new focal spot such that X-rays emitted from that new focal spot are projected to the target position. Additionally, the X-ray optics may be tilted in dependence of the position of that new focal spot and in dependence of the wavelength of the (characteristic) X-rays emitted from that new focal spot such that the angle of incidence between the X-ray optics (X-ray reflecting mirror(s)) and the X-rays incident on the X-ray optics meets the Bragg condition.

In a fourth aspect of the invention, an X-ray analysis system is provided, wherein the system comprises the X-ray generator as described above; and an X-ray beam centering element for assisting centering of an X-ray beam generated by the X-ray generator with respect to a goniometer center. The X-ray beam centering element is made of an X-ray beam attenuating material. Moreover, the X-ray beam centering element comprises a centering hole located in the center of the X-ray beam entering element. The thickness of the X-ray beam centering element decreases with decreasing distance to the centering hole.

The thickness may decrease according to a predefined gradient profile. The gradient profile may be a linearly decreasing profile, a step-wise decreasing profile or any other meaningful profile.

Assuming that the X-ray beam centering element is aligned such that its centering hole coincides with the goniometer center of the X-ray analysis system (this alignment between centering element and goniometer center can be performed optically), the X-ray beam projected by the X-ray generator onto the X-ray beam centering element can be easily aligned to the goniometer center by taking into account the intensity attenuation of the X-ray beam passing through the X-ray beam centering element. The measured intensity of the attenuated X-ray beam increases with decreasing distance to the centering hole and therefore with decreasing distance to the goniometer center. The projected X-ray beam can be (successively) moved by the X-ray generator to positions on the X-ray beam centering element leading to a higher X-ray beam intensity (lower beam attenuation) until the centering hole is reached.

The system further comprises an X-ray detector for detecting the intensity of the X-ray beam passing through the X-ray centering element. The X-ray detector may be a semiconductor-based area detector. The X-ray detector may be further used for X-ray analysis after the X-ray beam centering has been accomplished.

In a fifth aspect of the invention, a method of automatically centering an X-ray beam on a goniometer center of an X-ray analysis system is described. The method is performed by the above-described X-ray analysis system and comprises the following steps: positioning the X-ray beam centering element such that its centering hole coincides with a goniometer center; projecting an X-ray beam onto the X-ray beam centering element; measuring the intensity of the attenuated X-ray beam passing through the X-ray centering element; and moving the projected X-ray beam in dependence of the measured intensity of the attenuated X-ray beam until the X-ray beam passes through the centering hole.

The moving step and the measuring step may be repeated iteratively until the projected X-ray beam has reached the centering hole. That is, the X-ray beam may be moved by the X-ray generator (X-ray optical device of the X-ray generator) to a position on the X-ray centering element and the intensity of the X-ray beam for that position is measured. The measured intensity for that position is used/fed back to control the X-ray generator (i.e., X-ray optical device of the X-ray generator) to move the X-ray beam to a subsequent new position located closer to the centering hole. This sequence of moving the projected X-ray beam to a position on the X-ray beam centering element and measuring the X-ray beam intensity for that position is performed several times until the maximum beam intensity has been measured, which is an indication that the projected X-ray beam has passed the centering hole.

The step of positioning the X-ray beam centering element may be performed manually or automatically. An optical imaging system may be employed to position the X-ray centering element such that its centering hole coincides with the goniometer center.

In a sixth aspect of the invention, one or more computer program products are provided comprising program code (instructions) to cause the X-ray optical device to execute the steps of the method(s) described above. The program code may be stored in a non-transitory recording medium. The non-transitory recording medium may be a DVD, CD, a solid state memory or any other non-transitory recording medium.

### Brief Description of the Drawings

Further details, aspects and advantages of the present invention described herein will become apparent from the following drawings, in which:
- Fig. 1: is a schematic drawing of an X-ray generator comprising an X-ray optical device for automatically aligning the X-ray optics and an X-ray beam according to the present invention;
- Fig. 2a: is a schematic drawing showing the alignment of an X-ray beam to a target position in connection with an X-ray optical device comprising a two-dimensional X-ray optics.
- Fig. 2b: is a schematic drawing showing the alignment of the X-ray optics to at least one focal spot of an X-ray source in connection with the X-ray optical device of Fig. 2a.
- Figs. 3a and 3b: are schematic drawings showing one implementation of a moving mechanism employed for the alignment of X-ray optics and X-ray beam in connection with a two-dimensional X-ray optics.
- Fig. 4: is a flow diagram illustrating a method of automatically aligning an X-ray beam with respect to a target position;
- Fig. 5: is a flow diagram illustrating a method of automatically centering an X-ray beam on a goniometer center of an X-ray analysis system; and
- Fig. 6: is a schematic drawing illustrating an X-ray beam centering element used in the centering method of Fig. 5.

### Detailed Description

In the following description, for the purposes of explanation and not limitation, specific details are set forth in order to provide for a thorough understanding of the X-ray generator and X-ray optical device described herein. It will be apparent for one skilled in the art that the disclosed devices may deviate within the scope of protection from specific details set forth hereinafter.

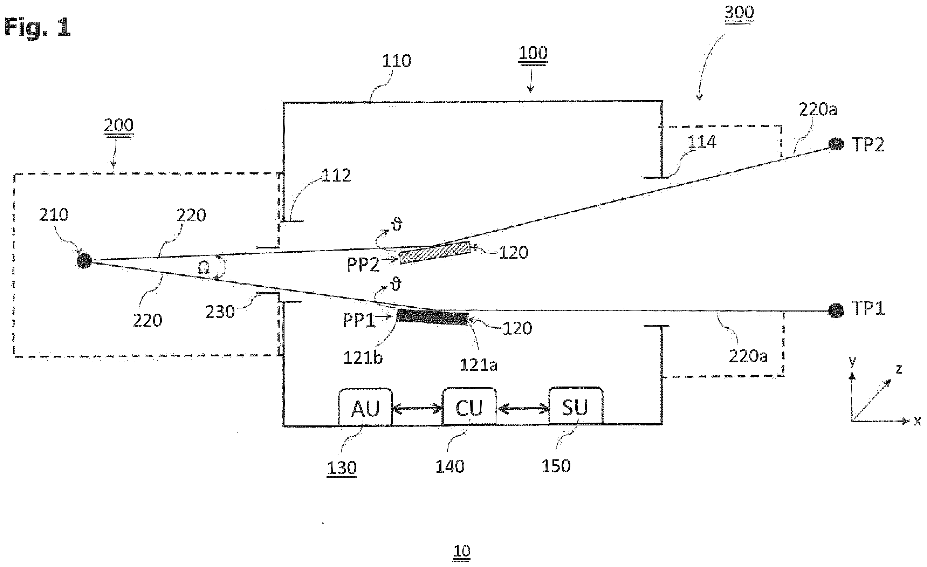

In the following, reference is made to Fig. 1. Fig. 1 is a schematic representation of an X-ray optical device 100 and an X-ray generator 10 according to the invention.

The X-ray generator 10 comprises an X-ray source 200 and the X-ray optical device 100. Optionally, the X-ray generator 10 may further comprise a (removable) beam cleaning unit 300 or a collimating unit to optimize the X-ray beam 220a.

The X-ray source 200 is configured to generate X-rays 220. The X-ray source 200 may be a conventional X-ray source 200 configured to generate X-rays 220 by bombarding a static or rotating metal target (anode of the X-ray source) with high-energy electrons (emitted by a cathode of the X-ray source). The interaction between the electrons and the target material at a target area 210 causes the generation of X-rays that are emitted in different directions in space. The spot-like target area 210 which is the origin of the X-ray emission is denoted as focal spot 210 of the X-ray source 200. As metal target a copper (Cu), molybdenum (Mo), silver (Ag) or iron (Fe) target may be used. The emission characteristics (for instance, the wavelengths of the Kα, Kβ emission lines) depends on the metal target employed. According to one variant, the X-ray source 200 may comprise a (static or rotating) target having two or more target sections with different target materials. The X-ray source may be configured to switch between different focal spots on different sections having different target materials. In such a case it is possible to obtain X-rays of different emission characteristics from the same X-ray source 200 by selectively switching between different focal spots associated with different target materials. According to another variant, the X-ray source 200 may comprise a (static or rotating) target having only one target material. Also in this variant, the X-ray source 200 may be configured to change the position of the focal spot on the target. For instance, the X-ray source 200 may be configured to change the focal spot position if an intensity drop of the emitted (characteristic) X-rays in connection with the actual focal spot is observed. In such a case the focal spot position may be shifted to a fresh (unconsumed) target position in order to maintain a desired intensity level. The change of the focal spot position may be carried out by, for instance, changing the position of the target relative to the electron emitter (i.e., the cathode of the X-ray source) or by deflecting the electron beam using the electromagnetic fields.

It is noted that the present invention does not depend on the details of the X-ray source 200. Any type of X-ray source 200 (for instance, a source having a fixed target or rotating target, with a single target material or two or more different target materials) that is configured to emit X-rays of desired emission characteristics (i.e., desired wavelength(s), desired flux/intensity, substantially constant flux over a desired solid angle, etc.) can be used. In particular, an X-ray source 200 is employed configured to emit desired characteristic wavelengths (e.g., Kα, Kβ emission lines) with substantially constant X-ray flux over a wide solid angle.

The X-ray optical device 100 comprises a housing 110 that is arranged in front of the X-ray source 200. The housing 100 has an entrance opening 112 and an exit opening 114 through which X-rays can pass. The entrance opening 112 is arranged on the rear side (i.e., the side facing the X-ray source 200). The exit opening 114 is arranged on the front side (i.e., the side facing away from the X-ray source 200).

The X-ray optical device 100 further comprises an X-ray optics 120 within the housing 100. The X-ray optics 120 is configured to generate an X-ray beam 220a from X-rays 220 emitted from the focal spot 210 and propagating through an exit aperture 230 of the X-ray source 200 and the entrance opening 112 of the housing 110. Moreover, the X-ray optics 120 is configured to project the generated X-ray beam 220a onto a (desired) target position (denoted as TP1 and TP2 in Fig. 1). The target position may be the position of a sample to be analysed on a sample stage of a goniometer or any other position selected by a user.

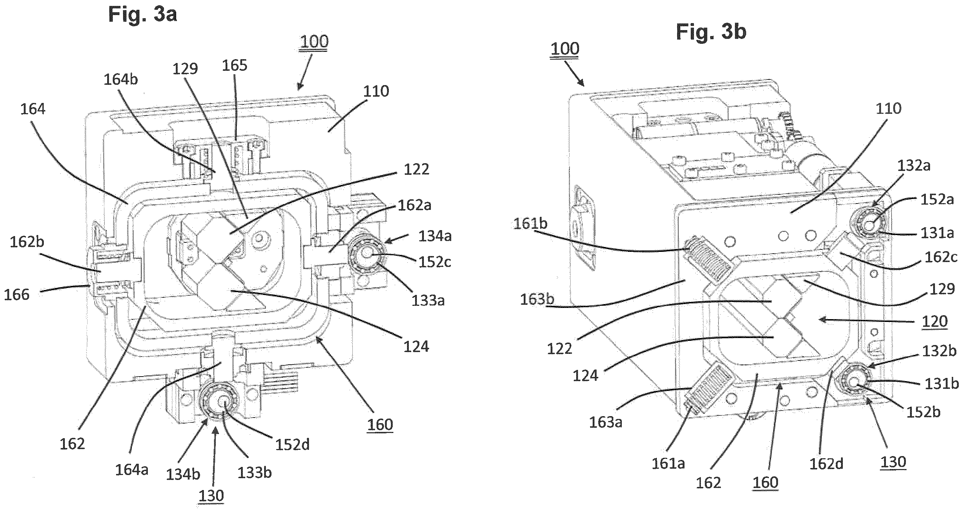

The X-ray optics 120 is movably mounted in the housing 110. It can be moved in at least one lateral direction, i.e., in at least one direction transverse to the X-ray beam propagation direction. Moreover, the X-ray optics 120 can be tilted within the housing to vary the angle of incidence in dependence of the X-ray wavelength to be adjusted. The X-ray beam propagation direction corresponds to the direction in which the beam is projected (i.e., along the x-axis in Fig. 1). The at least one direction transverse to the X-ray beam propagation direction may be a direction (substantially) perpendicular to the X-ray propagation direction (for instance, along the y-axis and/or z-axis in Fig. 1). A specific implementation of a bearing mechanism configured to movably mount the X-ray optics 120 in the manner discussed above, will be described in more detail in connection with Figs. 3a and 3b.

The X-ray optical device 100 further comprises an actuating unit 130. The actuating unit 130 is configured to tilt the X-ray optics 120 within the housing 110 to pre-adjust an angle of incidence such that the intensity of the projected X-ray beam 220a is maximized. The angle of incidence for which an optimized/maximized intensity can be expected may vary in dependence of the (characteristic) wavelength of the X-rays 220 to be projected. Accordingly, the actuating unit 120 is configured to adjust the angle of incidence in dependence of the wavelength of the X-rays 220 to be adjusted. The angle of incidence is the angle θ between the incident X-rays 220 and the reflective surface of the X-ray optical device (see Fig. 1). For X-ray optics 120 consisting of mirrors having d-spaced multilayers, the angle of incidence depends on the X-ray wavelength according to Bragg's law, i.e., *n*λ* = *2d sin(ϑ)*.

The actuating unit 130 is further configured to move the X-ray optics 120 within the housing 110 in at least one direction transverse to the X-ray beam propagation direction. In the simplified illustration in Fig. 1, for purpose of explanation only, the moving direction transverse to the X-ray beam propagation direction coincides with the y-axis. However, it is also conceivable that the moving direction is along the z-axis or in any direction in the y-z-plane depending on the specific geometry of the X-ray optics 120.

The actuating unit 130 is in particular configured to move the X-ray optics 120 along the at least one direction transverse to the X-ray beam propagation direction and to maintain at the same time (i.e., during movement) the pre-adjusted angle of incidence. That is, the angle of incidence between the X-ray optics 120 and the incident X-rays is kept to a pre-adjusted angle value while moving the X-ray optics 120 in the at least one direction (y-direction in Fig. 1).

This moving mechanism is illustrated in a simplified and exaggerated way in Fig. 1. The X-ray optics 120 is moved by the actuating unit 130 in y-direction from a projection position PP1 to a projection position PP2. At the same time the pre-adjusted angle of incidence θ at projection position PP1 (which is adjusted by the actuating unit 130 such that the beam intensity is maximized) is also maintained at projection position PP2. That is, the pre-adjusted angle of incidence θ at the two different positions PP1 and PP2 is the same.

The maintenance of the pre-adjusted angle of incidence can be achieved by moving the X-ray optics 120 at its front end 121a and at its rear end 121b differently, but still in a coordinated way, in the at least one direction transverse to the X-ray beam propagation direction (in y-direction in Fig. 1). As derivable from Fig. 1, the X-ray optics 120 is moved by the actuating unit 130 in y-direction to a greater extent at its front end 121a than at its rear end 121b. The difference between the front end movement and rear end movement may depend on the geometry of the X-ray optics 120, in particular on the length of the X-ray optics 120 in beam propagation direction, and may be adjusted accordingly.

The movement of the X-ray optics 120 as described above allows for a movement (lateral deflection) of the projected X-ray beam 220a along the at least one direction transverse to the beam propagation direction (y-direction in Fig. 1). In the simplified illustration of Fig. 1, for instance, the X-ray optics 120 is moved from projection position PP1 to projection position PP2 and as a result of this movement, the projected X-ray beam 220a is moved in the same direction (i.e., in y-direction) from target position TP1 to target position TP2. Since the angle of incidence is maintained at a pre-adjusted constant value (preferably at an angle value that leads to a maximized beam intensity), and since the X-ray flux from the X-ray source is substantially constant over the solid angle Ω (see Fig. 1), the intensity (and the shape) of the generated X-ray beam 220a remains (substantially) invariant during movement.

From Fig. 1 it also becomes clear that the maximum range of lateral beam movement depends on the size of the exit aperture 230 of the X-ray source 200. The size of the exit aperture 230 defines the solid angle Ω within which X-rays 220 are propagating to the X-ray optics 120 (i.e., the source beam divergence). The size of the exit aperture 230 may be adjusted to the desired range/amplitude of lateral X-ray beam movement.

The moving mechanism described herein can be used to automatically align the projected beam 220a to a desired target (for instance alignment to TP1 or TP2 in Fig. 1). There is no need to tilt the housing 110 or the whole generator 100 as it is described in the prior art.

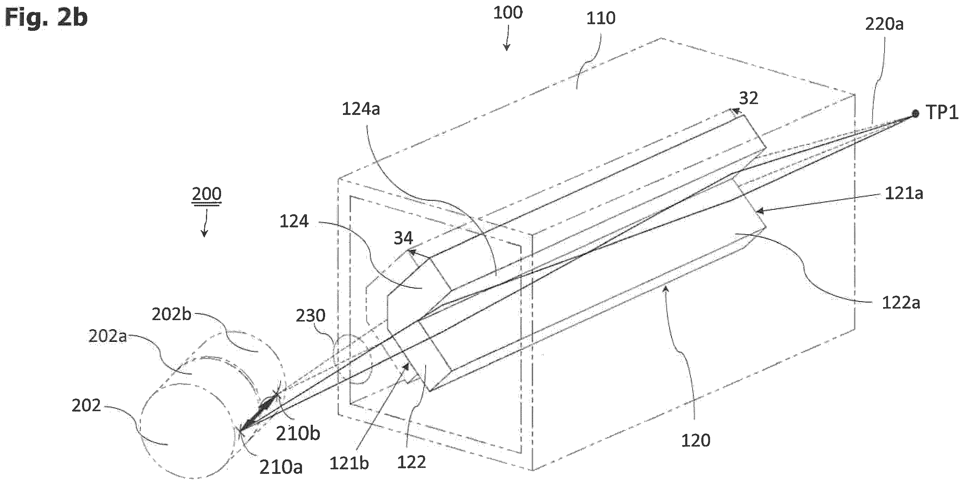

The above described movement of the X-ray optics 120 can also be used for automatically aligning the X-ray optics 120 to a new focal spot of the X-ray source 200 (not shown in Fig. 1). If the focal spot 210 on the X-ray source target is changed, the distance between the new focal spot and the X-ray optics 120 changes. In such a case the position and angular orientation (i.e., angle of incidence) of the X-ray optics 120 has to be re-aligned with respect to that new focal spot in order to be able to project an X-ray beam 220a to a desired target position. The alignment of the X-ray optics 120 with respect to a new focal spot position will be further described in connection with Fig. 2b.

The X-ray optical device 100 may further comprise a sensing unit 150. The sensing unit may be configured to sense the actual projection position, tilt (angle of incidence) and/or movement of the X-ray optics 120. The sensing unit 150 may comprise at least one sensor configured to sense the actual projection position, tilt and/or movement of the X-ray optics 120 directly or indirectly by, for instance, measuring the degree of actuation of the X-ray optics 120.

The X-ray optical device 100 may further comprise a control unit 140. The control unit 140 may be in communication with the sensing unit 150 to receive sensor data indicative of the (actual) position, tilt and/or movement of the X-ray optics.

The control unit 140 may further be in communication with the actuating unit 130 and configured to control the actuating unit 130 to perform the above described movement and/or tilt of the X-ray optics 120. More specifically, the control unit 140 may comprise at least one processor configured (programmed) to: calculate, based on information indicative of the wavelength of the X-ray beam 220a and/or the type of optics 120 employed for X-ray beam projection, a desired angle of incidence for the X-ray optics 120 and control the actuating unit 130 to tilt the X-ray optics 120 in accordance with the calculated angle of incidence; calculate, based on information indicative of a target position and/or the type of optics 120 employed for X-ray beam projection, a projection position for the X-ray optics 130 that corresponds to a desired target position and control the actuating unit 130 to move the X-ray optics 120 to the calculated projection position; and/or calculate, based on information indicative of a focal spot position and/or the type of optics employed for X-ray beam projection, an angle of incidence and/or a projection position and control the actuating unit 130 to move and tilt the X-ray optics 120 in accordance with the calculated angle of incidence and/or a projection position.

In the schematic illustration in Fig. 1 the X-ray optics 120 is represented as X-ray reflecting element. However, it should be clear that the moving mechanism described above can be implemented in connection with various types of X-ray optics. For instance, the X-ray optics 120 may be a one-dimensional X-ray optics comprising one X-ray reflecting mirror or a two-dimensional X-ray optics comprising two X-ray reflecting mirrors arranged perpendicular to each other, side-by-side or sequentially in a Kirkpatrick-Baez configuration. Preferably, the X-ray mirrors may be multilayer mirrors (with graded d-spacing). Moreover, the X-ray reflecting mirrors may have a parabolic or elliptical geometry in order to generate a collimated or focused X-ray beam 220a.

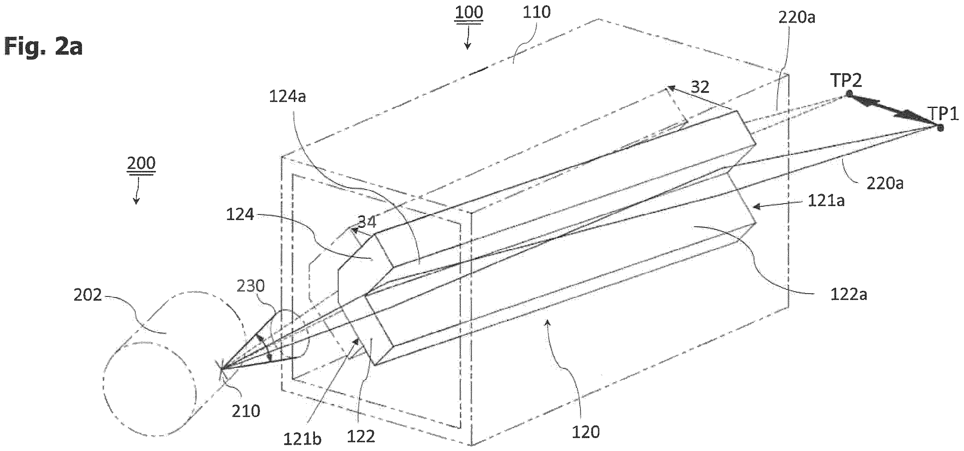

Reference is now made to Figs. 2a and 2b, which illustrate one embodiment of the X-ray optics 120 of the X-ray optical device 100 discussed above in connection with Fig. 1.

The X-ray optics 120 is a two-dimensional X-ray optics comprising two X-ray reflecting mirrors 122, 124 arranged side-by-side and perpendicular to each other. Preferably, the X-ray reflecting mirrors 122, 124 are multilayer mirrors with graded d-spacing. Moreover, the multilayer mirrors 122, 124 may be optimized for reflection of X-rays of a specific wavelength (e.g., Cu-Kα, Mo- Kα) provided that the mirrors 122, 124 are properly aligned with respect to the focal spot 210 of the X-ray source 200.

X-rays 220 emitted from a focal spot 210 on the target 202 and passing through the exit aperture 230 of the X-ray source 200 are reflected by the two laterally arranged X-ray reflecting mirrors 122, 124 and projected to a target position TP1 as shown in Fig. 2a. The X-ray beam propagation direction is in longitudinal direction of the reflecting mirrors 122, 124, whereas the normals of the surfaces 122a, 124a of the X-ray reflecting mirrors 122, 124 are perpendicular to the X-ray beam propagation direction. This mirror configuration conditions the X-ray beam 220a in both lateral directions so that a monochromatized X-ray beam with a well-defined cross-sectional size can be obtained.

As further illustrated in Fig. 2a, the X-ray optics 120 is movably mounted in the housing 110 and can be moved, by the actuating unit 130 (not shown in Fig. 2a), in lateral directions transverse to the X-ray beam propagation direction. In Fig. 2a the movement of the X-ray optics 120 (X-ray reflecting mirrors 122, 124) is exemplarily from a first projection position (solid line representation of mirrors 122, 124) to a second projection position (dashed line representation of mirrors 122, 124) which causes the projected beam 220a to move in the same lateral direction transverse to the beam propagation direction from a first target position TP1 to a second target position TP2.

In both projection positions the mirrors 122, 124 are oriented with respect to the focal spot of the X-ray source 200 such that the X-ray beam 220a projected to the corresponding target positions TP1 and TP2 has substantially the same maximized intensity. The intensity of the X-ray beam 220a can be maximized by tilting the X-ray optics 120, by the actuating unit 130, such that the angle of incidence between the incident X-rays 220 and the respective mirror surfaces 122a, 124a meets the Bragg condition. Hence, to obtain an X-ray beam 220a of maximized intensity at both target positions and, the adjusted angle of incidence must be the same at both projection positions.

To maintain the angle of incidence which leads to Bragg reflection during movement, the front end 121a of the mirror optics 120 is moved stronger than the rear end 121b. The arrows 32, 34 in Fig. 2a indicate these different lateral movements of the X-ray optics 120 at its front end 121a and rear end 121b. The amount at which the X-ray optics 120 is moved at its front end 121a and rear end 121b depends on the (radial) distance and therefore on the length of the X-ray optics 120 (the X-ray mirrors 122, 124). Hence, by moving the X-ray optics 120 within the housing 130 differently, but still in a coordinated way (in the same lateral direction transverse to the beam propagation direction) it is possible to laterally move the projected X-ray beam 220 between different target positions TP1, TP2 while maintaining a desired pre-adjusted angle of incidence (which is the Bragg angle for multilayer mirrors). As a result, the characteristics of the projected X-ray beam 220a does not considerably change during movement, i.e., it has the same intensity, shape and cross-sectional size.

With respect to Fig. 2b an alignment of the X-ray optics 120 with respect to different focal spots 210a, 210b on the target 2020 of the X-ray source 200 is further described. The X-ray optics 120 is the same two-dimensional X-ray optics as in Fig 2a.

In Fig. 2b the X-ray optics 120 (see solid line) is positioned and oriented such that X-rays 220a emitted from focal spot 210a of the X-ray source 200 are projected to target position TP1. That is, the two-dimensional X-ray optics 120 is moved, by the actuating unit 130, to a corresponding projection position (solid line representation of mirrors 122, 124) within the housing 110 and tilted, by the actuating unit 130, to adjust an angle of incidence that meets the Bragg condition.

It is conceivable that another focal spot 210b is selected (actuated) that is located on a target area different from the target area of focal spot 210a. For instance, if the target 202 at focal spot 210a is exhausted, a new focal spot 210b on the target 202 may be actuated. Or if the target 202 comprises at least two target regions 202a, 202b having different target materials, as indicated in Fig. 2b, the focal spots 210a, 210b may lie in the different target regions 202a, 202b.

If focal spot 202b is selected, the X-ray optics 120 aligned to focal spot 202a has to be re-aligned with respect to the selected (new) focal spot 210b. This re-alignment of the X-ray optics 120 can be done fully automatically with the X-ray optical device 100 according to the invention. That is, the X-ray optics 120 is moved by the actuating unit 130 to projection position (dashed line representation of mirrors 122, 124) and tilted by the actuating unit 130 such that X-rays 220 emitted from focal spot 210b are projected onto the same target position TP1. Again, the X-ray optics 120 is moved at its front end 121a and rear end 121b differently (to a varying degree), but in a coordinated way, so that the X-ray optics 120 is not only moved laterally along a desired direction, but also tilted such that a desired angle of incidence (Bragg angle for the multilayer mirrors 122, 124) is obtained. The re-aligned X-ray optics 120 is illustrated by dashed lines in Fig. 2b.

With reference to Figs. 3a und 3b one implementation of an actuating unit 130 and a bearing mechanism 160 will be further described. Fig. 3a shows the rear end and Fig. 3b the front end of the X-ray optical device 100.

The X-ray optics 120 of the X-ray optical device 100 according to Figs. 3a and 3b has the geometry of a two-dimensional X-ray optics 120 as described above in connection with Figs. 2a and 2b. That is, the X-ray optics 120 comprises two X-ray reflecting mirrors 122, 124 arranged perpendicular to each other and in a side-by-side configuration. Both mirrors 122, 124 are held by a mirror holder 129. The mirrors 122, 124 held by the mirror holder 129 are supported by the bearing mechanism 160 in a freely movable way within the housing 110 of the X-ray optical device 100.

The bearing mechanism 160 comprises a bearing frame 162 configured to receive the X-ray optics 120. The length of the bearing frame 162 substantially corresponds to the length of the mirrors 122, 124. Moreover, the bearing mechanism 160 comprises an outer frame 164 that surrounds the bearing frame 162 at its rear end 121b (see Fig. 3a). The bearing frame 162 and the outer bearing frame 164 form together a cardanic bearing at the rear end of the X-ray optics 120. The rotational axes of the cardanic bearing are oriented along the vertical and horizontal directions of the housing 110.

The outer bearing frame 164 further comprises (rod-like) elements 164a, 164b. The elements 164a, 164b are arranged at opposing sides of the outer bearing frame 164 and along the vertical rotational axis of the cardanic bearing. Element 164b is movably received by a sleeve 165 arranged in the housing 110. Element 164a is in cooperation with a transmission wheel 133b of one of the two rear end drive motors 134a, 134b of the actuating unit 130 (see Fig. 3a).

In a similar way, the bearing frame 162 comprises (rod-like) elements 162a and 162b. The elements 162a, 162b are arranged at opposing sides of the bearing frame 162 and along the horizontal rotational axis of the cardanic bearing. Element 162b is movably received by a sleeve 166 arranged in the housing 110. Element 162a is in cooperation with a transmission wheel 133a of the other one of the two rear end drive motors 134a of the actuating unit 130 (see Fig. 3a).

At the front end (see Fig. 3b), the bearing frame 162 comprises (rod-like) elements 162c and 162d. They are arranged along the diagonals (i.e., along the normals of the reflecting surfaces of the X-ray mirrors 122, 124) and in cooperation with respective transmission wheels 131a, 131b of two front end drive motors 132a, 132b of the actuating unit 130. Moreover, the bearing mechanism 160 further comprises two spring-biased (rod-like) elements 161a, and 161b which are movably received in corresponding sleeves 163a, 163b of the housing 110. The elements 161a and 161b are arranged along the respective diagonal directions and opposite to the elements 162c, 162d.

Hence, the bearing mechanism 160 described above enables a freely movable bearing of the X-ray optical device 120 within the housing 110.

The actuating unit 130 comprises the two front end drive motors 132a, 132b (Fig. 3b) and two rear end drive motors 134a, 134b (Fig. 3a), as mentioned above. The front end drive motors 132a, 132b (see Fig. 3b) are rotary drive motors each comprising a rotary shaft with an eccentric transmission wheel 131a, 131b with a predefined eccentricity. Moreover, each of the front end drive motors 132a, 132b and each of the rear end drive motors 134a, 134b is provided with an absolute encoder (see encoders 152a, 152b and 152c, 152d) configured to measure the absolute angular position of each of the drive motors 132a, 132b, 134a, 134b, and, thus, the actuation of each drive motor individually.

The eccentric transmission wheel 131a of drive motor 132a cooperates with element 162c. The eccentric transmission wheel 131b of drive motor 132b cooperates with element 162d. The elements 162c and 162d act as motion transmission elements which convert the rotary motion into a corresponding translatory motion in direction of the normals of the mirror surfaces 122, 124. Hence, by rotating the front end drive motors 132a, 132b, the transmission elements 162c, 162d are moved along the diagonal directions (i.e., along the normals of the mirror surfaces) and transmit this movement to the bearing frame 162. Accordingly, the bearing frame 162 and the X-ray mirror optics 120 within the bearing frame 162 are moved at its front end in the same direction (i.e., along the normals of the mirror surfaces of the X-ray reflecting mirrors 122, 124). This front end movement is used to adjust the tilt of the X-ray optics 120. It should be clear that each front end drive motor 132a, 132b can be moved independently from each other. In particular, the front end drive motors 132a, 132b can be moved alone or together (through appropriate control by the control unit 140) so that a desired tilt of the X-ray optics 120 can be adjusted. The tilt of the X-ray mirror optics 120 can be sensed by the absolute encoders 152a, 152b (e.g., absolute magnetic encoders) provided for the front end drive motor 132a, 132b and configured to measure the absolute angular position of each front end drive motor 132a, 132b individually. The encoders 152a, 152 may be part of the sensing unit 150 described above.

The rear end drive motors 134a, 134b are also rotary drive motors. Each rear end drive motor 134a, 134b comprises a rotary shaft with an eccentric transmission wheel 133a, 133b with a predefined eccentricity. The eccentric transmission wheel 133a of drive motor 134a cooperates with element 162a. The eccentric transmission wheel 133b of drive motor 134b cooperates with element 164a. The elements 162a and 164a act as motion transmission elements which convert the rotary motion into a corresponding translatory motion in direction of the rotational axes of the cardanic bearing. Hence, by rotating the rear end drive motors 134a, 134b, the transmission elements 162a, 164a are moved along the rotational axes and transmit this movement to the outer bearing frame 164 and to the bearing frame 162, respectively. Accordingly, the X-ray mirror optics 120 within the bearing frame 162 is moved along the rotational axis of the cardanic bearing at its rear end. The absolute encoders 152c, 152d (e.g., absolute magnetic encoders) associated with the rear end drive motors 134a, 134b measure the absolute angular position of each rear end drive motor 134a, 134b individually and thus the rear end movement of the X-ray mirror optics. This rear end movement is used in combination with the front end movement to position the X-ray optics 120 within the housing at a desired projection position, while a pre-adjusted orientation (angle of incidence) is maintained.

The above-described moving mechanism in combination with cardanic bearing of the X-ray optics 120 at its rear end enables a precise alignment of the X-ray optics 120 within the housing. In particular, the cardanic bearing of the X-ray optics 120 at its rear end enables a reduction of the employed drive motors to 4 motors for alignment of the X-ray optics within the housing space. Moreover, the absolute encoders 152a-152c enable a precise measurement of the actuation of each drive motor 132a, 132b, 134a, 134b at the front end and rear end and thus a precise measurement of the position and tilt of the X-ray optics 120.

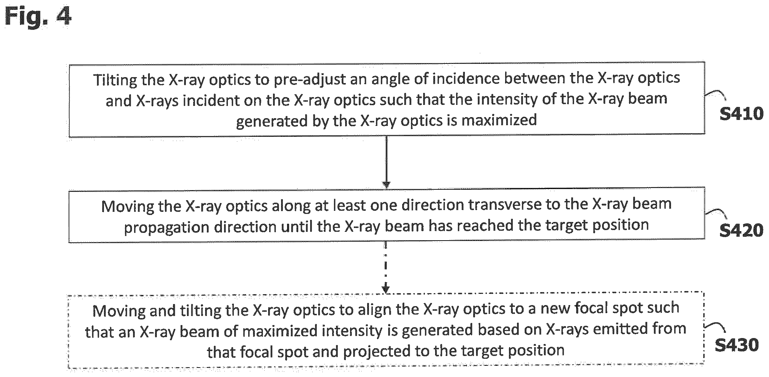

With reference to the flow diagram in Fig. 4, a method of aligning an X-ray beam 220a with respect to a target position is further described. The method is performed by the X-ray optical device 100 comprising an X-ray optics 120 as described above. The X-ray optical device 100 is arranged in front of an X-ray source 200 (such as an X-ray source 200 having a hybrid target comprising two different target materials as shown in Fig. 2b, or a single material target as shown in Fig 2a) and configured to generate and project an X-ray beam based on the X-rays 220 received from the X-ray source 200. The method comprises the following steps: In a first step S410, the X-ray optics 120 is tilted by the actuating unit 130 of the X-ray optical device 100 to pre-adjust an angle of incidence between the X-ray optics 120 and X-rays 220 incident on the X-ray optics 120 such that the intensity of the X-ray beam 220a generated by the X-ray optics is maximized. In a subsequent second step S420, the X-ray optics 120 is moved by the actuating unit 130 of the X-ray optical device 100 along at least one direction transverse to the X-ray beam propagation direction until the X-ray beam 220a projected by the X-ray optical device 100 has reached the target position step. The pre-adjusted angle of incidence is maintained during the second step S420.

If the focal spot 219, 210a, 210b of the X-ray source 200 from which X-rays 220 are emitted to the X-ray optical device 110 is changed (see for instance Fig. 2b), the X-ray optics 120 may additionally be moved and tilted by the actuating unit 130 of the X-ray optical device 100 so that the X-ray optics 120 is aligned to the new focal spot 210, 210a, 210b such that an X-ray beam 220a of maximized intensity is generated based on X-rays 220 emitted from that new focal spot 210a, 210b and projected to the target position (third step S430).

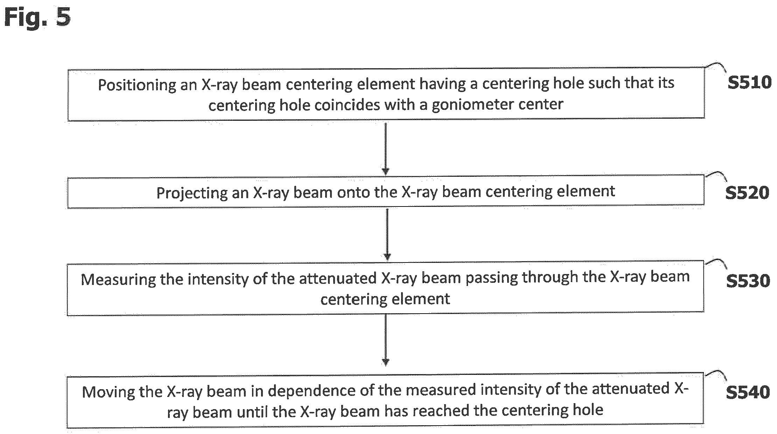

With reference to the flow diagram in Fig. 5, a method of automatically centering an X-ray beam on a goniometer center of an X-ray analysis system is described. The method is performed by an X-ray analysis system comprising an X-ray generator 10 having an X-ray optical device 100 for X-ray beam generation as described above, an X-ray detector (preferably a semiconductor-based area detector) for detecting X-rays, and a goniometer having a rotatable goniometer arm on which the X-ray detector is mounted. Depending on the specific needs, the X-ray generator may be fixed with regard to the goniometer (for instance, for single crystal diffractometers) or mounted on a rotatable goniometer arm (for instance, for powder diffractometers).

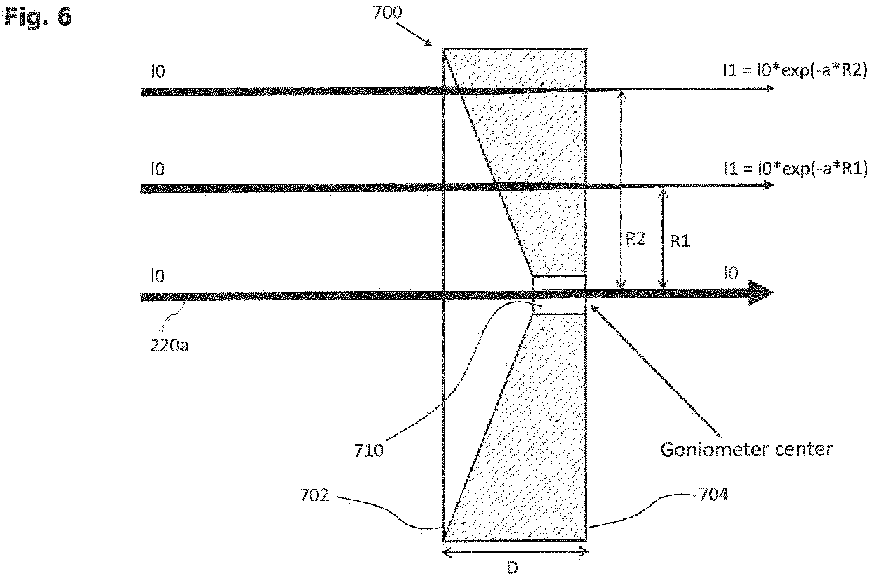

To center an X-ray beam generated by the X-ray generator 10 onto the goniometer center (at which preferably a sample to be measured is positioned), in a first step S510 of the method, an X-ray beam centering element 700 is positioned in the vicinity of the goniometer center. The X-ray beam centering element 700 is illustrated in Fig. 6 and has a centering hole 710 in the center of the centering element 700. The X-ray centering element 700 is positioned such that the centering hole 710 coincides with the goniometer center. This positioning of the X-ray centering element 700 can be performed optically by means of an optical imaging system being part of the X-ray analysis system.

In the following, the X-ray centering element 700 is further described in connection with Fig. 6, which represents a cross-sectional view of the centering element 700. The X-ray centering element 700 is made of a material that is at least partially transparent for X-rays. The X-ray centering element 700 has a centering hole 710 arranged centrally and a variable thickness *D* (along X-ray propagation direction) which continuously decreases starting from peripheral regions of the X-ray centering element 700 towards the centering hole 710.

In Fig. 6 the thickness D of the X-ray centering element decreases linearly with decreasing distance to the centering hole 710. However, it should be clear that this is only one implementation and other thickness gradients are conceivable, such as a decrease according to a predefined, non-linear function.

As further illustrated in Fig. 6, X-ray beams 220a are attenuated by the X-ray centering element 700 and the degree of attenuation correlates with the thickness *D* of the X-ray centering element 710. In the center of the X-ray centering element 700, X-ray beams 220a can pass through the centering 710 hole without attenuation.

The further steps of the method will be described in connection with Fig. 5. In a second step S520, an X-ray beam 220a is projected by the X-ray optical device 100 onto the (front side 702 of the) X-ray centering element 700.

The X-ray beam 220a projected onto the X-ray centering element 700 is attenuated while passing through the X-ray centering element 700. That is, the intensity *I₁* of the attenuated X-ray beam 220a leaving the X-ray centering element 700 at its rear side 704 is decreased compared to the initial intensity I₀ of the X-ray beam 220a. The amount of intensity attenuation correlates with the thickness *D* of the X-ray centering element 700, which in turn depends on the distance *R₁, R₂* to the centering hole 710. That is, with decreasing distance *R₁, R₂* of the incident X-ray beam 220a to the centering hole 710 the attenuation of the X-ray beam 220a by the X-ray centering element 700 decreases and the intensity *I₁* increases. Hence, the intensity *I₁* of the attenuated X-ray beam leaving the X-ray centering element is a measure for the distance of the X-ray beam 220a to the centering hole 710. This relationship between X-ray beam intensity and distance to the centering hole 710 is illustrated in Fig. 6, wherein the parameter *α* in Fig. 6 is an attenuation constant of the material of the X-ray centering element 700.

In a third step S530 of the method, the intensity *I₁* of the X-ray beam passing through the X-ray centering element 700 is measured by the detector. As the measured intensity *I₁* correlates with the distance of the X-ray beam 220a from the centering hole 710, the measured intensity value can be used for moving (scanning) the X-ray beam 220a towards the centering hole 710.

In a fourth step S540 of the method, the X-ray beam 220a is moved in dependence of the measured X-ray beam intensity *I₁* until the centering hole 710 has been reached. This X-ray beam movement is performed by the X-ray optical device 100 in dependence of the intensity value(s) measured by the detector. For instance, the measured intensity *I₁* of a projected beam 220a passing through the centering element 700 is fed back to the X-ray optical device 100 (its control unit 130). Based on the fed-back intensity, the actuating unit 120 of the X-ray optical device 100 (which is controlled by the control unit 130) moves the X-ray optics 120 within the housing such that the X-ray beam 220a projected by the X-ray optics 120 is moved along positions of the X-ray centering element 700 resulting in higher measured intensities *I₁*, which may be fed-back again to the X-ray optical device 100. The third step S530 and fourth step S540 may be repeated several times until the projected X-ray beam passes through the centering hole 710.

With the centering method described above, it is possible to center an X-ray beam automatically by only moving the X-ray optics within the housing. There is no need to move the whole X-ray generator (which is usually a very heavy unit) in a manual way. Moreover, since only the X-ray optics within the housing is moved, a very precise centering of the projected X-ray beam can be achieved.

The above-described X-ray optical device enables a fully automated movement of a projected X-ray beam in at least one direction. As the angle of incidence between X-rays and X-ray optics is maintained during movement, the shape and the intensity of the X-ray beam remains substantially unchanged during beam movement. In particular, the X-ray optical device enables an alignment of an X-ray beam to a desired target position in a fully automated way.

The claimed X-ray optical device also allows for an adjustment of the X-ray optics to the X-ray source (focal spot of the X-ray source) in a fully automated way. Depending on the focal spot position it is possible to move and orient the X-ray optics within the housing corresponding to the new focal point position.

## Claims

1. An X-ray optical device (100), comprising:
a housing (110) to be arranged in front of an X-ray source (200);
an X-ray optics (120) that is movably mounted in the housing (110) and configured to receive X-rays (220) from the X-ray source (200) to generate and project a beam of X-rays (220a); and
an actuating unit (130) configured to move the X-ray optics (120) within the housing (110) in at least one direction transverse to an X-ray beam propagation direction while maintaining a pre-adjusted angle of incidence between the X-ray optics (120) and the incident X-rays (220) to move the X-ray beam (220a) in the at least one direction transverse to the propagation direction.

2. The X-ray optical device (100) of claim 1, wherein the actuating unit (130) is configured to move the X-ray optics (120) along the at least one direction until the X-ray beam (220a) projected by the X-ray optics (120) has reached a target position.

3. The X-ray optical device (100) of claim 1 or claim 2, wherein the actuating unit (130) is further configured to tilt the X-ray optics (120) within the housing (110) to pre-adjust an angle of incidence between the X-ray optics (120) and the X-rays (220) incident on the X-ray optics (120) such that the intensity of the X-ray beam (220a) is maximized.

4. The X-ray optical device (100) of claim 3, wherein the angle of incidence is pre-adjusted in dependence of a desired X-ray wavelength and/or a focal spot (210, 210, 210b) of the X-ray source (200).

5. The X-ray optical device (100) of any one of claims 1 to 4, wherein the housing (110) is configured to receive X-rays (220) from varying focal spots (210, 210a, 210b) of the X-ray source (220), and the actuating unit (130) is further configured to move and tilt the X-ray optics (120) in dependence of the varying focal spots (210, 210a, 210b) such that an X-ray beam (220a) of maximized intensity is generated for each of the varying focal spots (210, 210a, 210b) and projected onto the target position.

6. The X-ray optical device (100) of any one of claims 1 to 5, further comprising a control unit (140) configured to:
control, based on information indicative of a target position, the actuating unit (130) to move the X-ray optics (120) to a projecting position within the housing (110) at which the X-ray beam (220a) is projected to the target position; and/or
control, based on information indicative of a wavelength of the X-ray beam, the actuating unit (130) to tilt the X-ray optics (120) such that the X-ray beam intensity is maximized; and/or
control, based on information indicative of a focal spot position of the X-ray source (200), the actuating unit (130) to move and tilt the X-ray optics (120) within the housing (110) such that the angle of incidence on the X-ray optics is adjusted to the focal spot position of the X-ray source (200).

7. The X-ray optical device (100) of any one of claims 1 to 5, wherein the actuating unit (130) comprises at least one drive motor (132a, 132b) arranged to move the X-ray optics (120) at its front end (121a) along the at least one direction transverse to the X-ray beam propagation direction, and at least one drive motor (134a, 134b) arranged to move the X-ray optics (120) at its rear end (121b) along the at least one direction transverse to the X-ray beam propagation direction.

8. The X-ray optical device (100) of claim 7, wherein the at least one front end drive motor (32a, 132b) is operated to tilt the X-ray optics (120) to pre-adjust a desired angle of incidence of the X-ray optics (120).

9. The X-ray optical device (100) of claims 7 or 8, wherein the at least one front end drive motor (132a, 132b) and the at least one rear end drive motor (134a, 134b) are operated in a coordinated way so that the pre-adjusted angle of incidence is maintained during movement of the X-ray optics (120) along the at least one direction.

10. The X-ray optical device (100) of any one of claims 7 to 9, wherein the X-ray optics (120) is a one-dimensional X-ray optics (120) comprising one X-ray mirror (122), wherein the actuating unit (130) comprises one front end drive motor (132a, 132b) to move the one-dimensional X-ray optics (120) at its front end (121a) along the at least one direction, and one rear end drive motor (134a, 134b) to move the X-ray optics (120) at its rear end (121b) along the at least one direction.

11. The X-ray optical device (100) of any one of claims 7 to 9, wherein the X-ray optics (120) is a two-dimensional X-ray optics (120) comprising two X-ray mirrors (122, 124) arranged perpendicular to each other, wherein the actuating unit (130) comprises two front end drive motors (132a, 132b) arranged to move the two-dimensional X-ray optics (120) at its front end (121a), and two rear end motors (134a, 134b) arranged to move the two-dimensional X-ray optics (120) at its rear end (121b).

12. The X-ray optical device (100) of any one of claims 1 to 11, wherein the X-ray optics (120) comprises at least one X-ray mirror with a first mirror section for reflecting X-rays of a first wavelength and a second mirror section for reflecting X-rays of a second wavelength, and wherein the actuating unit (130) is further configured to move and/or tilt the X-ray optics (120) in dependence of the first wavelength and/or the second wavelength to adjust an angle of incidence for the first wavelength and/or the second wavelength.

13. The X-ray optical device (100) of any one of claims 1 to 12, further comprising a bearing mechanism (160) configured to bear the X-ray optics (120) freely movable within the housing (110), wherein the bearing mechanism (160) comprises a cardanic bearing arranged and configured to freely suspend the rear end of the X-ray optics (120).

14. An X-ray generator (10), comprising:
an X-ray source (200) configured to generate X-rays (220); and
the X-ray optical device (100) of one of claims 1 to 14.

15. A method of aligning an X-ray beam (220) with respect to a target position, the method being performed by the X-ray optical device (100) of one of claims 1 to 14, which is arranged in front of an X-ray source (200) and configured to generate and project an X-ray beam based on the X-rays received from the X-ray source (220), the method comprising the steps of:
(a) tilting, by the actuating unit (130) of the X-ray optical device (100), the X-ray optics (120) to pre-adjust an angle of incidence between the X-ray optics (120) and the X-rays (220) incident on the X-ray optics (120) such that the intensity of the X-ray beam (220a) generated by the X-ray optics (120) is maximized; and
(b) moving, by the actuating unit (130) of the X-ray optical device (100), the X-ray optics (120) along at least one direction transverse to the X-ray beam propagation direction until the X-ray beam (220a) has reached the target position,
wherein the pre-adjusted angle of incidence is maintained during step (b).

16. The method of claim 15, wherein the focal spot (210, 201a, 210b) of the X-ray source (200) from which X-rays (220) are emitted to the X-ray optical device (100) is changed, wherein the method further comprises:
(c) moving and tilting, by the actuating unit (130) of the X-ray optical device (100), the X-ray optics (120) to align the X-ray optics (120) to a new focal spot (210, 210a, 210b) such that an X-ray beam (220a) of maximized intensity is generated based on X-rays (220) emitted from the new focal spot (210, 210a, 210b) and projected to the target position.

17. An X-ray analysis system, comprising:
the X-ray generator (10) of claim 14;
an X-ray beam centering element (700) for assisting centering of an X-ray beam (220a) generated by the X-ray generator (10) with respect to a goniometer center, wherein the X-ray beam centering element (700) is made of an X-ray beam attenuating material, and wherein the X-ray beam centering element (700) comprises a centering hole (710) located in the center of the X-ray beam centering element (700) and has a thickness that decreases with decreasing distance to the centering hole (710); and
an X-ray detector for detecting the intensity of the X-ray beam (220a) passing through the X-ray beam centering element (700).

18. A method of centering an X-ray beam (220a), the method being performed by the X-ray analysis system of claim 18, the method comprising:
positioning the X-ray beam centering element (700) in the vicinity of a goniometer center such that the centering hole (710) of the X-ray beam centering element (700) coincides with the goniometer center;
projecting an X-ray beam (220a) onto the X-ray beam centering element (700);
measuring the intensity of the attenuated X-ray beam passing through the X-ray beam centering element (700); and
moving the X-ray beam (220) in dependence of the measured X-ray beam intensity until the centering hole (710) has been reached.
